# EUROPEAN PATENT APPLICATION

(11) **EP 1 734 780 A2**
(43) Date of publication of application: **20.12.2006**
(21) Application number: 06012424.5
(22) Date of filing: 16.06.2006
(51) Int. Cl.: H04Q 7/38, H04Q 7/22

(54) **Mobile communication system, mobile terminal and mobile terminal transmission scheduling method**

(30) Priority: 17.06.2005 JP 2005177815
(71) Applicant: NEC Corporation, Minato-ku Tokyo (JP)
(72) Inventor: Nishimura, Osami, Minato-ku, Tokyo (JP); Kawabata, Hisashi, Minato-ku, Tokyo (JP); Sakuma, Emiko, Minato-ku, Tokyo (JP); Haseba, Yukio, Minato-ku, Tokyo (JP); Kondo, Daisuke, Minato-ku, Tokyo (JP)
(74) Representative: Glawe, Delfs, Moll

(57) **Abstract**

Disclosed is a mobile terminal transmission scheduling method for a mobile communication system. In each cell of this system, adjustment regions are provided externally adjacent to a soft-hand-over region. A mobile terminal (MT), upon entering this adjustment region, transmits an adjustment region scheduling request to a radio network controller (RNC) via a base station (BS) to which the MT currently belongs. The RNC transmits a scheduling adjustment start request to this BS. Upon receiving this request, this BS moves to an adjustment scheduling operating state and adjusts a scheduling control signal internally generated in the BS. The MT, upon exiting this adjustment region, transmits an adjustment region scheduling release request to the RNC via a BS to which the MT currently belongs. The RNC transmits a scheduling adjustment end request to this BS. Upon receiving this end request, this BS returns to a normal scheduling operating state.

## Description

### BACKGROUND OF THE INVENTION

### FIELD OF THE INVENTION

The present invention relates to a technology of transmission rate scheduling of transmitted data from a mobile terminal in a mobile communication system.

### DESCRIPTION OF THE RELATED ART

In a mobile communication system, a base station (or Node-B) controls the transmission power of mobile terminals within a cell covered by the base station. The base station controls the transmission power of each mobile terminal, so that the quality of the received data from a mobile terminal located at an edge of the cell should be approximately equal to the quality of the received data from a mobile terminal located at the center of the cell. Consequently, the transmission power of a mobile terminal located near a boundary of the cell is larger than the transmission power of a mobile terminal located at the center of the cell.

When a mobile terminal is moving at a high speed, the propagation characteristic of the transmitted wave from this mobile terminal also varies fast. The base station compensates this variation of the propagation characteristic by estimating the propagation characteristic of the transmitted wave from the mobile terminal. However, when the moving speed of the mobile terminal becomes much larger, processing for the estimation of the propagation characteristic becomes difficult to track the variation of the propagation characteristic, and hence the lower quality of the received data at the base station results. To prevent this, a mobile terminal moving at a high speed is controlled to raise its transmission power.

In recent years, an uplink (from a mobile terminal to a base station) with a higher transmission rate is required in mobile communication networks. For example, in a Wideband Code Division Multiple Access (WCDMA) system, provision of Enhanced Uplink Dedicated Channel (EUDCH) is proposed. This EUDCH requires a higher transmission power than the existing shared channels.

In the EUDCH, when a mobile terminal recedes from a base station, the base station instructs the mobile terminal to raise its transmission power, provided that there exists a radio resource margin. The base station, through this instruction, makes the mobile terminal to maintain a high transmission rate. And the base station achieves transmission rate scheduling of each mobile terminal to keep Rise over Thermal noise (RoT) over the whole cell constant, making use of a Rate Grant signal. This RoT indicates the total receive interference power in the uplink.

JP-2004-215276A [Reference 1] discloses a method of controlling the transmission rate of a mobile terminal based on the information on the power margin of and the transmission power from the mobile terminal.

In addition, JP2004-266812A [Reference 2] discloses a method of reducing the variation of the interference to an adjacent cell by making a mobile terminal in a soft-hand-over state to transmit data with a constant transmission rate.

As described above, in the existing mobile communication systems, a mobile terminal located at an edge of a cell is controlled to operate at a large transmission power. Then, the signal transmitted from this mobile terminal may possibly interfere an adjacent cell.

As the interference increases, the RoT in the adjacent cell increases. According to the technology described in Reference 1, the base station of this adjacent cell instructs the mobile terminals belonging to this base station to lower the transmission power in order to keep the value of RoT constant. As a result, the mobile terminals within this adjacent cell are forced to lower their transmission rate. And, to maintain the quality of the received data (at the base station) with a low transmission power (from each mobile terminal), the mobile terminals are required to reduce their transmission rate. In this way, a mobile terminal located near a boundary of the cell may lower the throughput in the adjacent cell.

The technology described in Reference 2 mitigates the variation of the interference to the adjacent cell when a mobile terminal is in a soft-hand-over state. However, even when a mobile terminal is not in a soft-hand-over state, the signals transmitted from the mobile terminal located near a boundary of the cell interfere the adjacent cell. Namely, the signals transmitted from a mobile terminal that is immediately before or after the soft-hand-over state also cause interference to the adjacent cell. The technology described in Reference 2 does not solve this problem.

### SUMMARY OF THE INVENTION

The first exemplary feature of the invention provides a mobile communication system, a mobile terminal and a mobile terminal transmission scheduling method that enable mitigation of the interference to an adjacent cell, immediately before or after a soft-hand-over state.

According to the first exemplary aspect of the invention, there is provided a mobile terminal transmission scheduling method for a mobile communication system. In each cell of this system, adjustment regions are provided externally adjacent to a soft-hand-over region. A mobile terminal (MT), upon entering this adjustment region, transmits an adjustment region scheduling request to a radio network controller (RNC) via a base station (BS) to which the MT currently belongs. The RNC transmits a scheduling adjustment start request to this BS. Upon receiving this request, this BS moves to an adjustment scheduling operating state and adjusts a scheduling control signal internally generated in the BS. The MT, upon exiting this adjustment region, transmits an adjustment region scheduling release request to the RNC via a BS to which the MT currently belongs. The RNC transmits a scheduling adjustment end request to this BS. Upon receiving this end request, this BS returns to a normal scheduling operating state.

Thus, the first exemplary aspect of the invention provides adjustment regions externally adjacent to the soft-hand-over region. When this mobile terminal is located in these adjustment regions, the base station to which this mobile terminal belongs adjusts the scheduling control signal internally generated. And the base station controls the transmission data rate by using this adjusted scheduling control signal. As a result, this aspect mitigates the interference to the adjacent cell caused by the mobile terminal that is close to the soft-hand-over state; and enhances the throughput in the adjacent cell.

Other features and aspects of the present invention will be clarified by the description of the preferred embodiments.

### BRIEF DESCRIPTION OF THE DRAWINGS

The above and further objects, novel features and advantages of the present invention will be more fully understood from the following detailed description when read together with the accompanying drawings in which:
FIG. 1 is a diagram showing an example of a mobile communication system to which the present invention applies;
FIG. 2 is a diagram for explaining a first example of a criterion for detecting entrance to and exit from an adjustment region;
FIG. 3 is a diagram for explaining a second example of a criterion for detecting entrance to and exit from an adjustment region;
FIG. 4 is a block diagram showing an example of the structure of a mobile terminal;
FIG. 5 is a block diagram showing an example of the structure of a base station;
FIG. 6 is a block diagram showing an example of the structure of a radio network controller;
FIG. 7 is a sequence chart for explaining the over-all operation of a mobile communication system;
FIG. 8 is a flow chart for explaining the operation of a mobile terminal;
FIG. 9 is a flow chart for explaining the operation of a base station; and
FIG. 10 is a flow chart for explaining the operation of a radio network controller.

### DETAILED DESCRIPTION OF THE PREFERRED EMBODIMENTS

Hereafter, preferred embodiments of the present invention will be described with reference to the drawings.

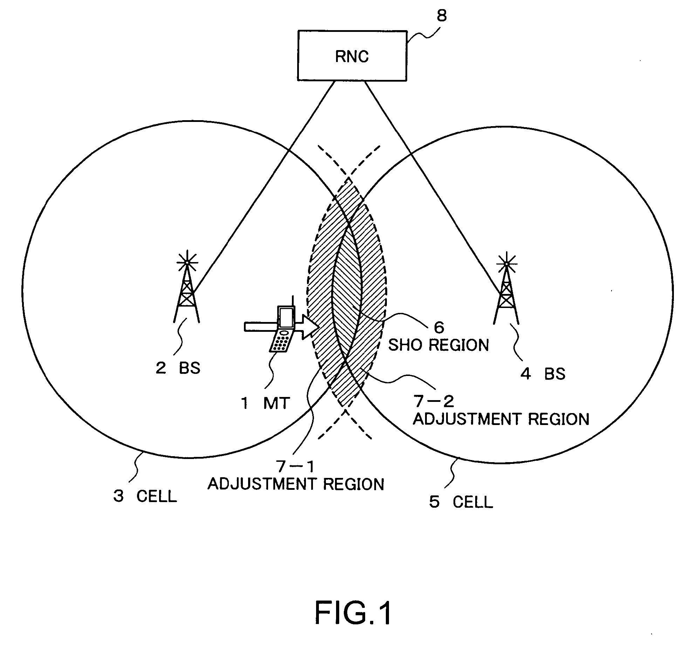

FIG. 1 is a diagram showing an example of a mobile communication system to which the present invention applies.

As shown in FIG. 1, this mobile communication system consists of a mobile terminal (MT) 1, base stations (BSs) 2 and 4, and a radio network controller (RNC) 8. In FIG. 1, the mobile terminal 1 is moving in the direction from the base station 2 to the base station 4, and can be connected to the base station 2 and 4. The radio network controller 8 controls the base stations 2 and 4. The base stations 2 and 4 are adjacent each other, and they cover cells 3 and 5, respectively.

FIG. 1 also shows a soft-hand-over (SHO) region 6 and adjustment regions 7-1 and 7-2. The soft-hand-over region 6 is a region where the mobile terminal 1 is able to communicate with both the base stations 2 and 4. When the mobile terminal 1 is located in this SHO region 6, this mobile terminal 1 is in a soft-hand-over state. Here, the criterion for providing the SHO region 6 is well known in this field of technology, and its detailed explanation is omitted.

The adjustment regions 7-1 and 7-2 are provided externally adjacent to this soft-hand-over region 6. The adjustment region 7-1 contains a part of the cell 3 and the adjustment region 7-2 contains a part of the cell 5.

The adjustment regions 7-1 and 7-2 are regions externally adjacent to the SHO region 6. When the mobile terminal 1 is located in this adjustment region 7-1, it is highly possible for the transmitted signals from this mobile terminal to interfere the adjacent cell 5. Considering this situation, these adjustment regions are provided in each of the cells.

The mobile terminal 1, by comparing the information on the coordinates of the adjustment region received from the base station with its own position information, is able to judge whether the mobile terminal itself is located in the adjustment region or not. This information on the coordinates of the adjustment region is the one indicating the position of the adjustment region in the cell. This information may be transmitted from the base station to the mobile terminal 1, when the mobile terminal 1 recognizes the cell as its serving cell. In a case where the mobile terminal is not equipped with a mechanism for detecting position information such as Global Positioning System (GPS), etc., the mobile terminal is able to judge whether the mobile terminal itself is located in the adjustment region or not, based upon the following examples of criteria for the judgment.

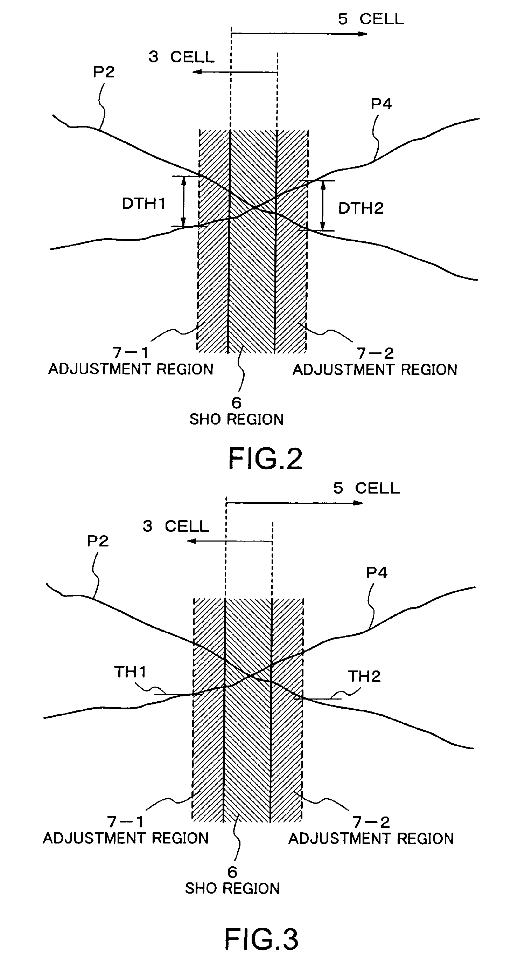

FIG. 2 is a diagram for explaining a first example of a criterion for judgment on entrance to and exit from an adjustment region in the mobile communication system shown in FIG. 1.

In FIG. 2, P2 indicates the received power level of a signal which the mobile terminal 1 receives (for instance, a pilot signal) from the base station 2. P4 indicates the received power level of a signal which the mobile terminal 1 receives from the base station 4. DTH1 indicates a first pre-defined differential threshold while DTH2 indicates a second pre-defined differential threshold. Here in FIG. 2, the mobile terminal 1 is assumed to be moving in the direction from the cell 3 to the cell 5.

In this example, at a time instant when a calculated value (P2 - P4 - DTH1) changes from a positive value to a negative value, the mobile terminal 1 recognizes this time instant as the time instant when this mobile terminal 1 enters the adjustment region 7-1. Namely, by detecting that the difference between the received signal power from the base station 2 to which this mobile terminal currently belongs and the received signal power from the adjacent base station 4 becomes lower than the first differential threshold (DTH1), the mobile terminal 1 recognizes that the mobile terminal itself is located in the adjustment region 7-1 of the cell 3 managed by the base station 2 to which the mobile terminal belongs, i.e., the serving cell. As the details will be described later, the mobile terminal 1, at the time instant when it enters the adjustment region 7-1, sends an adjustment region scheduling request to the radio network controller 8 (see FIG. 1) via the base station 2 to which the mobile terminal currently belongs (i.e., the base station that manages the serving cell).

As the mobile terminal 1 moves further ahead, the mobile terminal 1 enters the SHO region 6 and also enters the soft-hand-over state. As is well known in this field of technology, the mobile terminal 1, in this soft-hand-over state, changes the base station to which the mobile terminal 1 belongs. In the example shown in FIG. 2, during the soft-hand-over, the mobile terminal 1 changes the base station to which the mobile terminal 1 belongs from the base station 2 to the base station 4. As a result of this alteration of the base stations, the cell 5 is now the serving cell and the cell 3 the non-serving cell. In this soft-hand-over state, the difference between the received signal power from the base station 2 to which the mobile terminal 1 currently belongs and the received signal power from the current adjacent base station 4 remains below the value of DTH1.

After this alteration of the base stations, as the mobile terminal 1 moves further in the direction to the base station 4, the mobile terminal 1 enters the adjustment region 7-2. Since, at this time instant, the difference (P4 - P2) between the received signal power from the base station 4 to which the mobile terminal 1 currently belongs and the received signal power from the current adjacent base station 2 is lower than DTH2, the mobile terminal 1 recognizes that the mobile terminal 1 is located in the adjustment region 7-2 of the current serving cell 5.

As the mobile terminal 1 moves further ahead, the mobile terminal 1 exits the adjustment region 7-2. At this time instant, the difference (P4 - P2) between the received signal power from the base station 4 to which the mobile terminal 1 currently belongs and the received signal power from the current adjacent base station 2 exceeds DTH2. By this fact the mobile terminal 1 can recognize that the mobile terminal 1 has exited the adjustment region 7-2. As the details will be described later, the mobile terminal 1, at the time instant when it exits the adjustment region 7-2, sends an adjustment region scheduling release request to the radio network controller 8 through the base station to which the mobile terminal currently belongs (i. e. , the base station 4).

Here, DTH1 may be smaller than DTH2 in order to avoid frequent changes between the adjusted scheduling and the normal scheduling.

As is stated above, in this first example:
(1) At the time instant when the value (PP - PN - DTH1) changes from a positive value to a negative value, the mobile terminal 1 recognizes that the mobile terminal 1 has entered the adjustment region; and
(2) At the time instant when the value (PP - PN - DTH2) changes from a negative value to a positive value, the mobile terminal 1 recognizes that the mobile terminal 1 has exited the adjustment region.

Here, PP denotes the received signal power from the base station to which the mobile terminal 1 currently belongs, and PN denotes the received signal power from the current adjacent base station.

FIG. 3 is a diagram for explaining a second example of a criterion for judgment on entrance to and exit from an adjustment region in the mobile communication system shown in FIG. 1.

In FIG. 3, TH1 indicates a first pre-defined threshold and TH2 indicates a second pre-defined threshold. Here in FIG. 3, the mobile terminal 1 is again assumed to be moving in the direction from the cell 3 to the cell 5.

In this example, when a calculated value (P4 - TH1) changes from a negative value to a positive value, the mobile terminal 1 recognizes that the mobile terminal 1 has entered the adjustment region 7-1. Namely, by detecting that the received signal power from the current adjacent base station (i.e., base station 4) has exceeded the first threshold, the mobile terminal 1 recognizes that the mobile terminal 1 is located in the adjustment region 7-1 of the cell 3 managed by the base station 2 to which the mobile terminal 1 currently belongs, i.e., the serving cell.

As the mobile terminal 1 moves further ahead, the mobile terminal 1 enters the SHO region 6 and also enters the soft-hand-over state. As was described before, the mobile terminal 1, in this soft-hand-over state, changes the base station to which the mobile terminal 1 belongs. In the example shown in FIG. 3, during the soft-hand-over, the mobile terminal 1 changes the base station to which the mobile terminal 1 belongs from the base station 2 to the base station 4. In this soft-hand-over state, the received signal power from the current adjacent base station remains above TH1.

As the mobile terminal 1 moves further ahead, the mobile terminal 1 enters the adjustment region 7-2. Since, at this time instant, the received signal power from the current adjacent base station 2 is greater than TH2, the mobile terminal 1 recognizes that the mobile terminal 1 is located in the adjustment region 7-2 of the current serving cell 5.

As the mobile terminal 1 moves further ahead, the mobile terminal 1 exits the adjustment region 7-2. At this time instant, the received signal power from the current adjacent base station 2 becomes lower than TH2. By this fact the mobile terminal 1 can recognize that the mobile terminal 1 has exited the adjustment region 7-2.

Here, TH1 may be larger than TH2 in order to avoid frequent changes between the adjusted scheduling and the normal scheduling.

As is stated above, in this second example:
(1) At the time instant when the value (PN - TH1) changes from a negative value to a positive value, the mobile terminal 1 recognizes that the mobile terminal 1 has entered the adjustment region; and
(2) At the time instant when the value (PN - TH2) changes from a positive value to a negative value, the mobile terminal 1 recognizes that the mobile terminal 1 has exited the adjustment region.

Here, PN denotes the received signal power from the current adjacent base station.

The criterion for judgment on entrance to and exit from the adjustment region as described before is identified as a third example in the following, in the case where the mobile terminal 1 is equipped with a mechanism for detecting position information such as Global Positioning System (GPS), etc. In this third example, the information on the coordinates of the adjustment region as described earlier corresponds to the differential thresholds (DTH1 and DTH2) in the first example and to the thresholds (TH1 and TH2) in the second example.

In this way, in the first through third examples, the mobile terminal 1 recognizes the time instants of its entrance to and exit from the adjustment region, based upon its own position information obtained directly or indirectly.

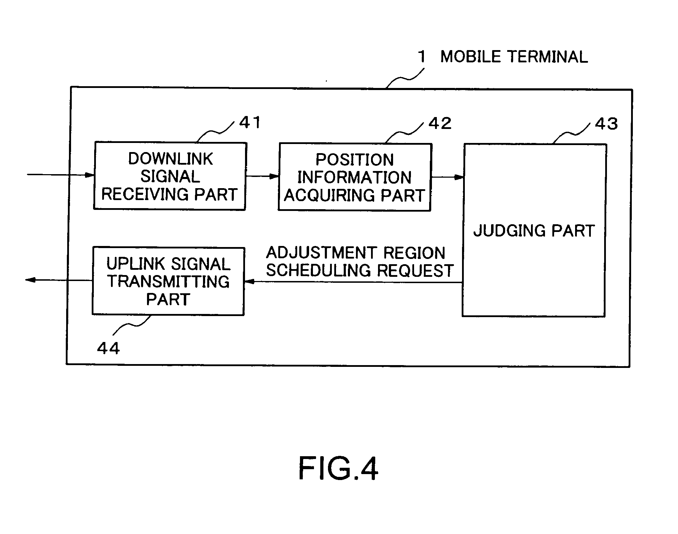

FIG. 4 is a block diagram showing an example of the structure of the mobile terminal 1 in the mobile communication system shown in FIG. 1.

As shown in FIG. 4, the mobile terminal 1 is provided with a downlink signal receiving part 41, a position information acquiring part 42, a judging part 43 and an uplink signal transmitting part 44.

The downlink signal receiving part 41 receives signals transmitted by the base station. The position information acquiring part 42 acquires position information from the received signals.

The judging part 43, based upon the position information supplied by the position information acquiring part 42, detects the time instants when the mobile terminal 1 enters and exits adjustment regions. And at the time instant when the mobile terminal 1 enters an adjustment region, the judging part 43 generates an adjustment region scheduling request and supplies it to the uplink signal transmitting part 44. In addition, at the time instant when the mobile terminal 1 exits an adjustment region, the judging part 43 generates an adjustment region scheduling release request and supplies it to the uplink signal transmitting part 44. These adjustment region scheduling request and adjustment region scheduling release request are transmitted to the radio network controller 8 via the base station to which the mobile terminal 1 belongs at the time instant when these requests occur.

When the mobile terminal 1 performs judgment on entrance to and exit from the adjustment region using the first example explained with reference to FIG. 2, the position information acquiring part 42 measures on the downlink signals, as position information, the received pilot signal power from the base station to which the mobile terminal 1 currently belongs and the received pilot signal power from the current adjacent base station. The judging part 43 generates the adjustment region scheduling request and the adjustment region scheduling release request, based upon these received signal power values and the criterion already explained with reference to FIG. 2.

Further, when the mobile terminal 1 performs judgment on entrance to and exit from the adjustment region using the second example explained with reference to FIG. 3, the position information acquiring part 42 measures on the downlink signals, as position information, the received pilot signal power from the current adjacent base station. And the judging part 43 generates the adjustment region scheduling request and the adjustment region scheduling release request, based upon this received signal power value and the criterion already explained with reference to FIG. 3.

Here, FIG. 4 shows the internal structure of the mobile terminal 1 that is only related to the present invention. For example, it is well known that the uplink signal transmitting part 44 transmits to the base station other signals than the adjustment region scheduling request and the adjustment region scheduling release request. However, the functions for generating these other signals are not directly related to the present invention, and thus explanations on these functions are omitted.

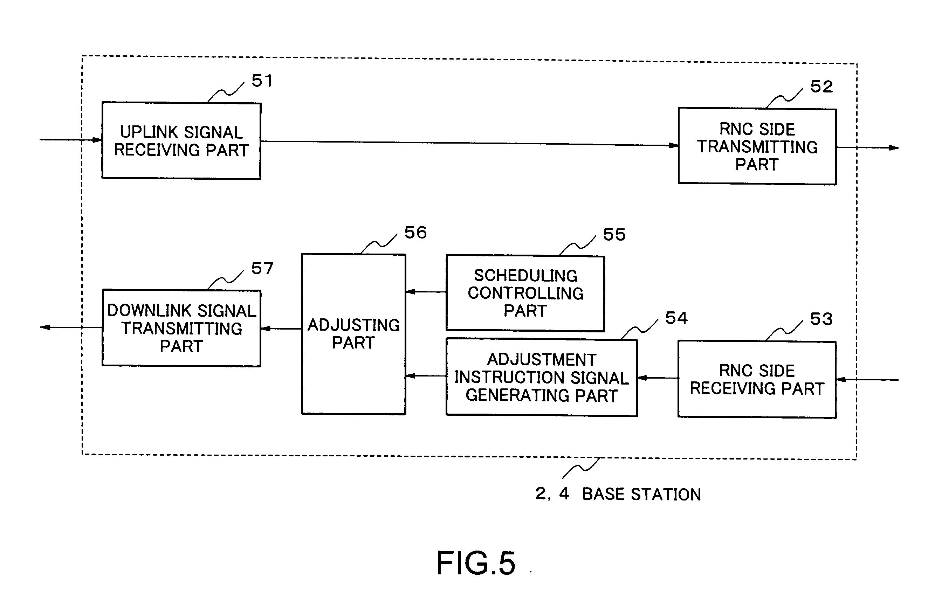

FIG. 5 is a block diagram showing an example of the structure of the base station 2 in the mobile communication system shown in FIG. 1. Here, the structure of the base station 4 is identical to that of the base station 2. In this FIG. 5, elements that are not directly related to the present invention are also omitted.

As shown in FIG. 5, the base station 2 consists of an uplink signal receiving part 51, an RNC side transmitting part 52, an RNC side receiving part 53, an adjustment instruction signal generating part 54, a scheduling controlling part 55, an adjusting part 56 and a downlink signal transmitting part 57.

The uplink signal receiving part 51 receives signals transmitted by the mobile terminal 1. The adjustment region scheduling request and the adjustment region scheduling release request contained in these received signals are transferred to the radio network controller (RNC) 8 through the RNC side transmitting part 52.

The RNC side receiving part 53 receives signals transmitted by the radio network controller 8 toward this base station.

The adjustment instruction signal generating part 54 monitors the received signal from this radio network controller 8. And upon detecting a scheduling adjustment start request in this received signal, the adjustment instruction signal generating part 54 outputs an adjustment instruction signal to the adjusting part 56. Further, upon detecting an active set addition notification in the received signal from the radio network controller 8, the adjustment instruction signal generating part 54 stops outputting the adjustment instruction signal.

In addition, upon detecting an active set deletion notification in the received signal from the radio network controller 8, the adjustment instruction signal generating part 54 starts outputting the adjustment instruction signal. Further, upon detecting a scheduling adjustment end request in this received signal, the adjustment instruction signal generating part 54 stops outputting the adjustment instruction signal.

The scheduling controlling part 55 generates a scheduling control signal for controlling a transmission rate, etc. of the mobile terminal 1, and supplies this scheduling control signal to the adjusting part 56. Since the concrete method of generating this scheduling control signal is well known to the skilled persons in the art, its detailed explanation is omitted.

While being supplied with the adjustment instruction signal, the adjusting part 56 adjusts and outputs the scheduling control signal. And while being not supplied with the adjustment instruction signal, the adjusting part 56 outputs the scheduling control signal without adjusting it. This output of the adjusting part 56 is transmitted to the mobile terminal 1 via the downlink signal transmitting part 57 as Rate Grant signal for instance. Here, Rate Grant signal is a transmission rate control signal in the EUDCH which the base station 2 or 4 uses for controlling the transmission rate of the mobile terminal 1.

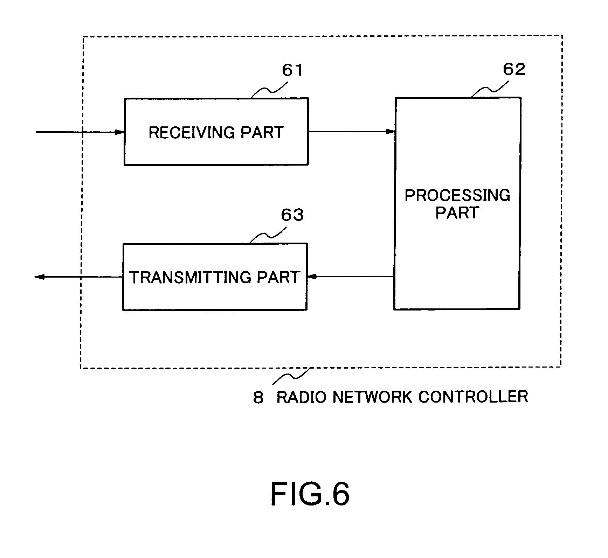

Next, with reference to FIG. 6, an example of the structure of the radio network controller 8 is explained. In the following explanation of this radio network controller 8, explanation of functions not directly related to the present invention is omitted.

As shown in FIG. 6, the radio network controller 8 consists of a receiving part 61, a processing part 62 and a transmitting part 63. Here, these receiving part, processing part and transmitting part are explained assuming that they are provided for each of the base stations, and FIG. 6 only shows the part corresponding to one base station.

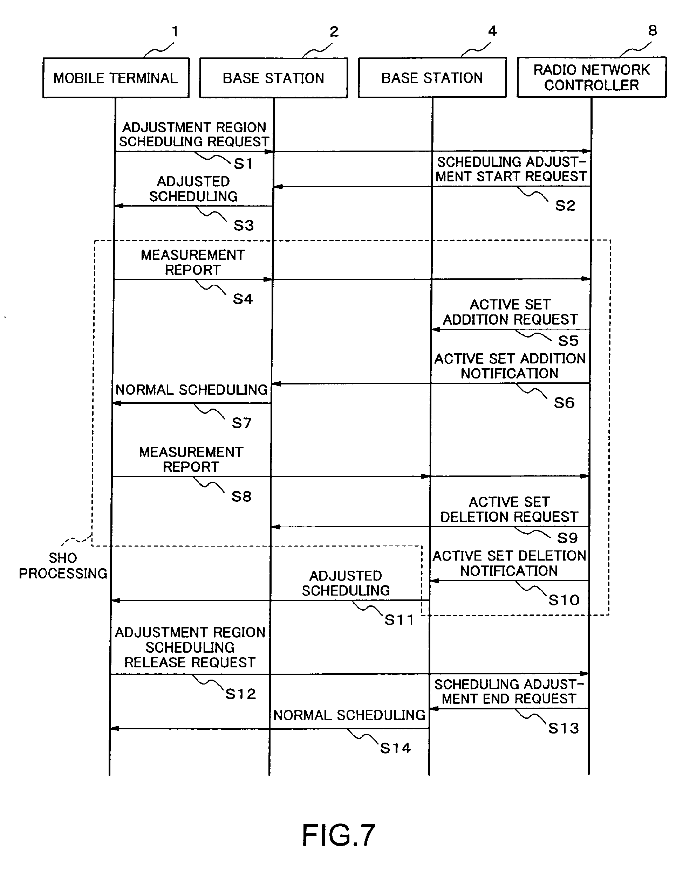

The receiving part 61 receives signal transmitted by the base station. The function and operation of the processing part 62 will be described later with reference to FIG. 7. The transmitting part 63 transmits signals generated by the processing part 62 to the corresponding base station.

In the following, with reference to FIG. 7, a mobile terminal transmission scheduling method is explained for use in the mobile communication system structured as described above.

FIG. 7 is a sequence chart for explaining the mobile terminal transmission scheduling method used in the mobile communication system as a whole shown in FIG. 1.

As is described earlier, it is desirable that the adjustment region should be defined for each cell considering the shape of the cell. Namely, it is desirable to define, for each cell, the thresholds for judging whether a mobile terminal is located in the adjustment region or not. For example, in the case where this judgment is performed using the second example explained with reference to FIG. 3, the thresholds TH1 and TH2 are transmitted to the mobile terminal by the base station managing the serving cell at the time instant when this mobile terminal recognizes that cell the serving cell. Or, these thresholds can be pre-set in the mobile terminal as a plural number of fixed values independent of the cell. The thresholds are determined in a similar manner in the case where the position judgment is performed using the first example described before.

Here, the mobile terminal 1 shown in FIG. 1 is assumed to be first located in the cell 3, receding from the base station 2 in the direction from the cell 3 to the cell 5, and moving toward the base station 4.

When the mobile terminal 1 is located in the cell 3, the mobile terminal 1 recognizes the cell 3 managed by the base station 2 the serving cell. In this case, the cell 5 adjacent to the serving cell is the non-serving cell. The base station 4 manages this cell 5.

First, the mobile terminal 1 judges whether the mobile terminal 1 itself is located in the adjustment region or not, based upon either one of the criteria for judgment described earlier.

When the mobile terminal 1 recognizes that the mobile terminal 1 itself has entered the adjustment region 7-1 (FIG. 1), the judging part 43 (FIG. 4) outputs an adjustment region scheduling request to the uplink signal transmitting part 44 (FIG. 4). This adjustment region scheduling request is a signal for requesting adjustment of the scheduling for the mobile terminal 1. This adjustment region scheduling request is transmitted from the uplink transmitting part 44 to the radio network controller 8 via the base station 2 (STEP S1 in FIG. 7).

Upon receiving this adjustment region scheduling request, the processing part 62 (FIG. 6) of the radio network controller 8 transmits a scheduling adjustment start request to the base station (base station 2) to which the mobile terminal 1 currently belongs (STEP S2). This scheduling adjustment start request is a signal for instructing the base station to start adjustment of the scheduling for the mobile terminal 1.

Upon receiving this scheduling adjustment start request, the adjustment instruction signal generating part 54 (FIG. 5) of the base station 2 outputs the adjustment instruction signal described earlier.

Meanwhile, the scheduling controlling part 55 performs normal scheduling for the transmission rate of the mobile terminal 1, and outputs a scheduling control signal to the adjusting part 56.

As is described before, the adjusting part 56 adjusts and outputs the scheduling control signal while being supplied with the adjustment instruction signal. Namely, the adjusting part 56 adjusts the scheduling control signal so as to lower the transmission rate of the mobile terminal 1. At STEP S3, the base station 2 transmits this adjusted scheduling control signal to the mobile terminal 1. As a result, in the adjustment region 7-1 in FIG. 1, the transmission rate of the mobile terminal 1 becomes lower than that under the normal scheduling control.

The following explanation on STEPs S4 through S10 refers to the soft-hand-over state of the mobile terminal 1. Since the operations of the mobile terminal 1, the base station 2 and the radio network controller 8 in the soft-hand-over state are well known to the skilled persons in the art, such parts directly related to the present invention will be explained below.

After a while, when the mobile terminal 1 enters the SHO region 6, the mobile terminal 1 transmits to the radio network controller 8 through the base station 2 a measurement report indicating that the mobile terminal 1 has entered the SHO region 6 (STEP S4).

When the radio network controller 8 receives this measurement report, the processing part 62 (FIG. 6) of the radio network controller 8 transmits an active set addition request to the base station 4 (STEP S5). And the processing part 62 transmits to the base station 2 an active set addition notification indicating that the base station 4 has been added to the active set (STEP S6).

When the base station 2 receives this active set addition notification, the adjustment instruction signal generating part 54 (FIG. 5) of the base station 2 stops outputting the adjustment instruction signal. And the adjusting part 56 outputs to the downlink signal transmitting part 57 the scheduling control signal supplied by the scheduling controlling part 55 without adjusting it. For example, Rate Grant signal generated by the scheduling controlling part 55 is transmitted to the mobile terminal 1 as it is. Namely, here the normal scheduling for a handover state is performed (STEP S7).

In this SHO state, the scheduling controlling part 55 performs scheduling in the soft-hand-over state. Since this scheduling in the soft-hand-over state is described, for instance, in Reference 2, detailed explanation is omitted.

Then, as the mobile terminal 1 moves further ahead, the mobile terminal 1 leaves the cell 3 into the cell 5, exits the SHO region 6 and enters the adjustment region 7-2. At this time instant, the mobile terminal 1 transmits to the radio network controller 8 via the base station 4 a measurement report indicating that the mobile terminal 1 has exited the SHO region 6 (STEP S8). It should be noted here that between STEPs S7 and S8 the mobile terminal 1 changes the base station to which the mobile terminal 1 belongs from the base station 2 to the base station 4.

When the radio network controller 8 receives this measurement report, the processing part 62 (FIG. 6) of the radio network controller 8 transmits an active set deletion request to the base station 2 (STEP S9). Upon receiving this active set deletion request, the base station 2 removes the mobile terminal 1 from its management list.

In addition, the processing part 62 transmits to the base station 4 an active set deletion notification indicating that the base station 2 has been deleted from the active set (STEP S10).

When the base station 4 receives this active set deletion notification, the adjustment instruction signal generating part 54 (FIG. 5) of the base station 4 starts outputting the adjustment instruction signal.

After alteration of the base stations, the scheduling controlling part 55 of the base station 4 performs scheduling for the transmission rate of the mobile terminal 1, and this scheduling controlling part 55 outputs the normal scheduling control signal to the adjusting part 56.

As is described before, while being supplied with the adjustment instruction signal, the adjusting part 56 adjusts and outputs the scheduling control signal. As a result, at STEP S11, the base station 4 transmits the adjusted scheduling control signal to the mobile terminal 1 (STEP S11) . As a consequence, the transmission rate of the mobile terminal 1 is lowered.

After that, as the mobile terminal 1 approaches the base station 4, the mobile terminal 1 enters the adjustment region 7-2. At this time instant, the judging part 43 (FIG. 4) of the mobile terminal 1 outputs an adjustment region scheduling release request (STEP S12). This adjustment region scheduling release request is transmitted to the radio network controller 8 through the uplink signal transmitting part 44 and the base station 4. This adjustment region scheduling release request indicates that the mobile terminal 1 has exited the adjustment region 7-2.

Upon receiving the adjustment region scheduling release request, the processing part 62 (FIG. 6) of the radio network controller 8, generates a scheduling adjustment end request and transmits it to the base station 4 (STEP S13). This scheduling adjustment end request is a signal for instructing the base station to stop adjustment of the scheduling for the mobile terminal 1.

Upon receiving the scheduling adjustment end request, the adjustment instruction signal generating part 54 (FIG. 5) of the base station 4 stops outputting the adjustment instruction signal. As a result, the scheduling control signal supplied by the scheduling controlling part 55 is output from the adjusting part 56 as it is. For example, Rate Grant signal is transmitted to the mobile terminal 1, based on the scheduling control signal that has been input to the adjusting part 56. Namely, the normal scheduling is performed (STEP S14).

Now, in STEPs S3 and S11, in order to suppress the interference to the adjacent cell, Eb/No (Energy per bit to Noise power density ratio) for the mobile terminal 1 is lowered. However, needless to say, it is the minimum condition that this lowered Eb/No satisfy the requirement for quality.

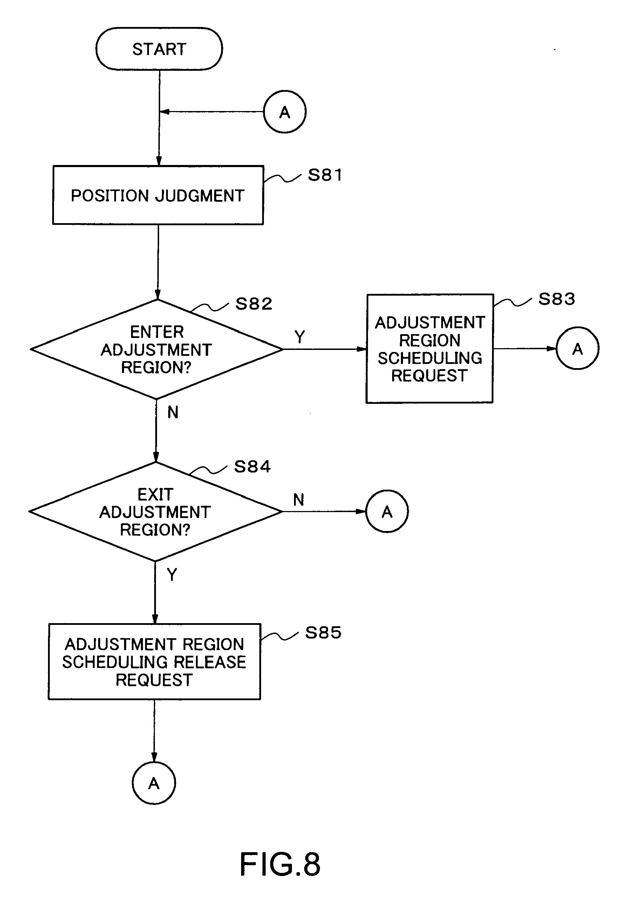

FIG. 8 is a flow chart for explaining the operation of the mobile terminal 1.

At STEP S81 in FIG. 8, the judging part 43 (FIG. 4) receives the own position information of this mobile terminal which the position information acquiring part 42 acquires based on the received signal. And, based on this position information, the judging part 43 judges the time instants when this mobile terminal 1 enters and exits the adjustment region. Here, as this criterion for judgment, either of the first, second and third examples can be used.

At STEP S82, if the judgment result at STEP S81 indicates "entrance to the adjustment region," the judging part 43 forwards the processing to STEP S83. If not the case, the processing of the judging part 43 moves to STEP S84. At STEP S83, the judging part 43 generates an adjustment region scheduling request and supplies it to the uplink signal transmitting part 44. This adjustment region scheduling request is transmitted to the radio network controller 8 via the base station. Then, the processing of the judging part 43 returns to STEP S81.

At STEP S84, if the judgment result at STEP S81 indicates "exit from the adj ustment region, " the judging part 43 forwards the processing to STEP S85. If not the case, the processing of the judging part 43 returns to STEP S81. At STEP S85, the judging part 43 generates an adjustment region scheduling release request and supplies it to the uplink signal transmitting part 44. This adjustment region scheduling release request is transmitted to the radio network controller 8 via the base station. Then, the processing of the judging part 43 returns to STEP S81.

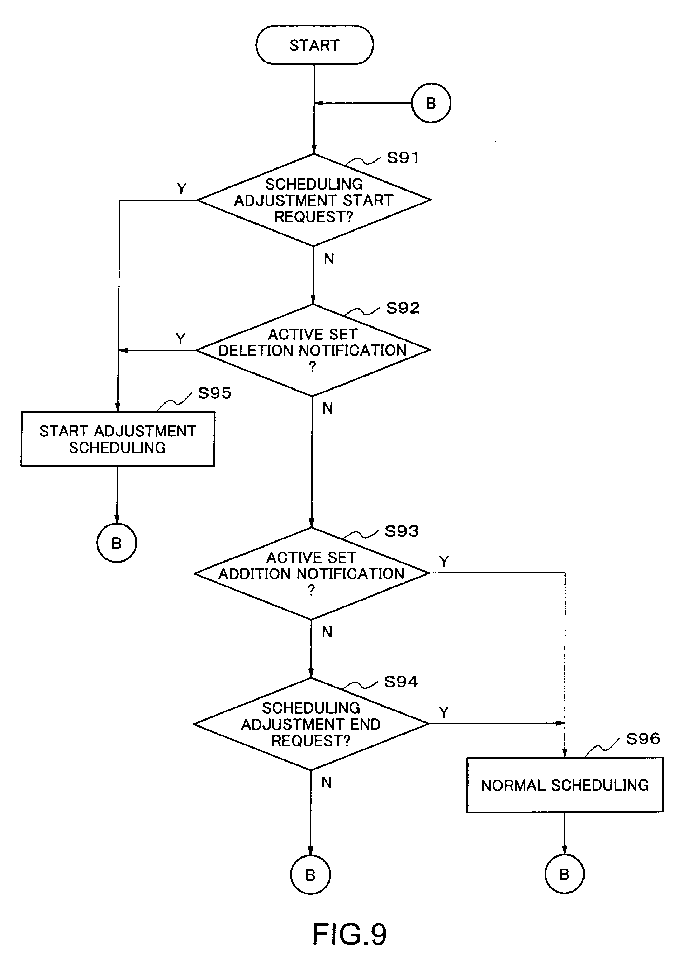

FIG. 9 is a flow chart for explaining the operation of the base station.

At STEP S91 in FIG. 9, the adjustment instruction signal generating part 54 (FIG. 5) judges whether the scheduling adjustment start request has been received or not from the radio network controller (RNC) 8. If the base station receives this scheduling adjustment start request, the processing of the base station proceeds to STEP S95. If not the case, the processing of the base station proceeds to STEP S92.

At STEP S92, the adjustment instruction signal generating part 54 judges whether an active set deletion notification has been received or not from the RNC. If the base station receives this active set deletion notification, the processing of the base station proceeds to STEP S95. If not the case, the processing of the base station proceeds to STEP S93.

At STEP S93, the adjustment instruction signal generating part 54 judges whether an active set addition notification has been received or not from the RNC. If the base station receives this active set addition notification, the processing of the base station proceeds to STEP S96. If not the case, the processing of the base station proceeds to STEP S94.

At STEP S94, the adjustment instruction signal generating part 54 judges whether a scheduling adjustment end request has been received or not from the RNC. If the base station receives this scheduling adjustment end request, the processing of the base station proceeds to STEP S96. If not the case, the processing of the base station returns to STEP S91.

At STEP S95, the adjustment instruction signal generating part 54 supplies an adjustment instruction signal to the adjusting part 56. And the adjusting part 56 adjusts the scheduling control signal that is output from the scheduling controlling part 55. In this way, at STEP S95, the base station starts adjustment scheduling. After this, the processing of the base station returns to STEP S91.

At STEP S96, the adjustment instruction signal generating part 54 stops supplying the adjustment instruction signal to the adjusting part 56. And the adjusting part 56 outputs, without any adjustment, the scheduling control signal that is output from the scheduling controlling part 55. In this way, at STEP S96, the base station stops the adjustment scheduling and restarts the normal scheduling. After this, the processing of the base station returns to STEP S91.

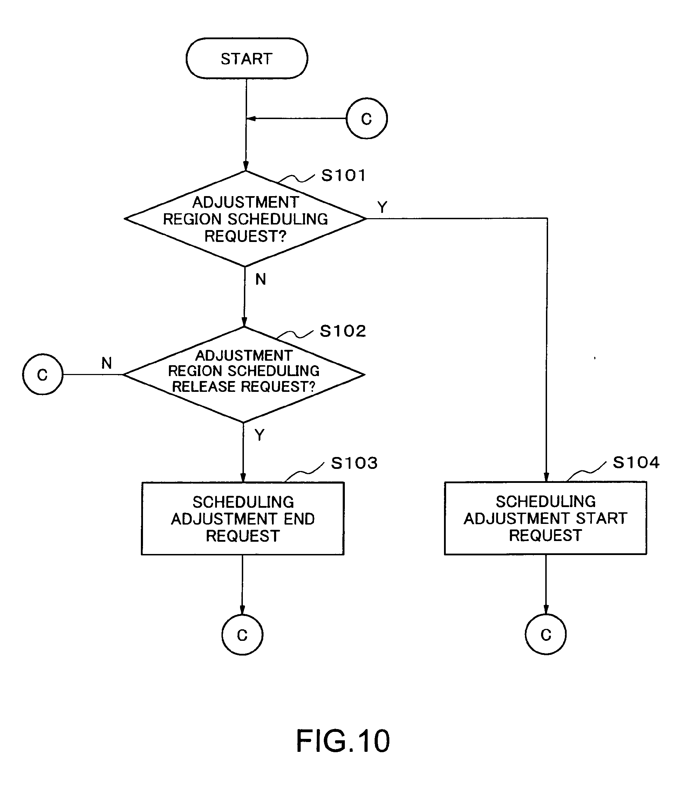

FIG. 10 is a flow chart for explaining the operation of the radio network controller (RNC) 8.

At STEP S101, the processing part 62 (FIG. 6) judges whether an adjustment region scheduling request has been received or not from the base station. If the RNC receives this adjustment region scheduling request, the processing of the processing part 62 proceeds to STEP S104. If not the case, the processing of the processing part 62 proceeds to STEP S102.

At STEP S102, the processing part 62 judges whether an adjustment region scheduling release request has been received or not from the base station. If the RNC receives this adjustment region scheduling release request, the processing of the processing part 62 proceeds to STEP S103. If not the case, the processing of the processing part 62 returns to STEP S101.

At STEP S103, the processing part 62 generates a scheduling adjustment end request and transmits it to the base station through the transmitting part 63. After this, the processing of the processing part 62 returns to STEP S101. At STEP S104, the processing part 62 generates a scheduling adjustment start request and transmits it to the base station through the transmitting part 63.

Here in FIG. 10, explanation is omitted on the generation of the active set deletion notification and the active set addition notification. These are such signals generated by the radio network controller 8 in the process of the soft-hand-over processing similar to the active set deletion request and the active set addition request. It should be noted that the base station also interprets the active set deletion notification and the active set addition notification as stated above and performs the operation directly related to the present invention.

In the above embodiments, an example of processing using Rate Grant signal is explained to instruct the mobile terminal 1 to lower its transmission rate. However, in the present invention, it is obvious that not only Rate Grant signal but also other signals can be used that are able to change the transmission rate of the mobile terminal 1.

Also, in the present invention, the mobile terminal 1 may autonomously lower its transmission power, when the mobile terminal 1 recognizes that the mobile terminal 1 is located in the adjustment regions 7-1 and 7-2. When the transmission power of the mobile terminal 1 is lowered, the base stations 2 and 4 find the reception of data errors. Because of this, the base station (in the serving cell) performs scheduling for lowering the transmission rate of the mobile terminal 1.

Furthermore, for effective use of the system capacity, the base station may perform prioritized scheduling depending on the status of the mobile terminal 1. For example, the base station can perform the following prioritized scheduling. The mobile terminal with the highest priority is such a mobile terminal that belongs to the current base station and is located outside the adjustment region 7. The mobile terminal with the second highest priority is such a mobile terminal that belongs to the current base station and is located within the adjustment region 7. The mobile terminal with the next priority is such a mobile terminal that belongs to the current adjacent base station.

While this invention has been described in connection with certain exemplary embodiments, it is to be understood that the subject matter encompassed by way of this invention is not be limited to those specific embodiments. On the contrary, it is intended for the subject matter of the invention to include all alternatives, modifications and equivalents as can be included with the sprit and scope of the following claims. Further, the inventor's intent is to retain all equivalents even if the claims are amended during prosecution.

## Claims

1. A mobile communication system including a plural number of mobile terminals, a first base station that individually controls a transmission rate of said plural number of mobile terminals, a second base station that is adjacent to said first base station and a radio network controller that controls said first and second base stations, said system being provided with a soft-hand-over region in each of cells that are covered by said first and second base stations and being provided with an adjustment region in each of said cells that is externally adjacent to said soft-hand-over region, wherein
said mobile terminal includes:
a position information judging part that detects time instants when said mobile terminal enters and exits said adjustment region; and
a mobile terminal side request signal transmitting part that transmits an adjustment region scheduling request to said radio network controller via a base station to which said mobile terminal currently belongs at a time instant when said mobile terminal enters said adjustment region and transmits an adjustment region scheduling release request to said radio network controller via a base station to which said mobile terminal currently belongs at a time instant when said mobile terminal exits said adjustment region,
said radio network controller includes:
a radio network controller side request signal transmitting part that transmits a scheduling adjustment start request to a base station to which said mobile terminal currently belongs upon receiving said adjustment region scheduling request from said mobile terminal and transmits a scheduling adjustment end request to a base station to which said mobile terminal currently belongs upon receiving said adjustment region scheduling release request from said mobile terminal; and
a soft-hand-over state notifying part that notifies start and end of soft-hand-over to said first and second base stations, and
each of said first and second base stations includes:
an adjustment instruction signal generating part that outputs an adjustment instruction signal during a period from reception of said scheduling adjustment start request to reception of said soft-hand-over start notification and also outputs an adjustment instruction signal during a period from reception of said soft-hand-over end notification to reception of said scheduling adjustment end request;
a scheduling controlling part that generates a scheduling control signal for controlling scheduling of said mobile terminal; and
an adjusting part that adjusts said scheduling control signal and transmits said adjusted scheduling control signal to said mobile terminal when said adjustment instruction signal is supplied and transmits said scheduling control signal to said mobile terminal without any adjustment when said adjustment instruction signal is not supplied.

2. The system of claim 1, wherein
said adjusting part adjusts said scheduling control signal to lower transmission rate of said mobile terminal when said adjustment instruction signal is supplied.

3. The system of claim 1, wherein
said mobile terminal transmits data using Enhanced Uplink Dedicated Channel (EUDCH).

4. The system of claim 3, wherein
said scheduling control signal is a Rate Grant signal.

5. The system of claim 1, wherein
said position information judging part measures a first received power PP from the base station to which said mobile terminal currently belongs and a second received power PN from the current adjacent base station,
recognizes that said mobile terminal has entered said adjustment region at a time instant when (PP - PN - DTH1) changes from a positive value to a negative value, and
recognizes that said mobile terminal has exited said adjustment region at a time instant when (PP - PN - DTH2) changes from a negative value to a positive value,
where DTH1 and DTH2 are a first pre-defined differential threshold and a second pre-defined differential threshold, respectively.

6. The system of claim 5, wherein
DTH1 is smaller than DTH2.

7. The system of claim 1, wherein
said position information judging part measures a received power PN from the current adjacent base station,
recognizes that said mobile terminal has entered said adjustment region at a time instant when (PN - TH1) changes from a negative value to a positive value, and
recognizes that said mobile terminal has exited said adjustment region at a time instant when (PN - TH2) changes from a positive value to a negative value,
where TH1 and TH2 are a first pre-defined threshold and.a second pre-defined threshold, respectively.

8. The system of claim 7, wherein
TH1 is larger than TH2.

9. The system of claim 1, wherein
said scheduling controlling part, in scheduling said plural number of mobile terminals, performs said scheduling with a higher priority set on those mobile terminals outside said adjustment region than other mobile terminals.

10. A mobile terminal that is used in a mobile communication system including a plural number of mobile terminals, a first base station that individually controls a transmission rate of said plural number of mobile terminals and a second base station that is adjacent to said first base station, said system being provided with a soft-hand-over region in each of cells that are covered by said first and second base stations and being provided with an adjustment region in each of said cells that is externally adjacent to said soft-hand-over region,
said mobile terminal comprising:
a position information judging part that detects time instants when said mobile terminal enters and exits said adjustment region; and
a mobile terminal side request signal transmitting part that transmits an adjustment region scheduling request to a base station to which said mobile terminal currently belongs at a time instant when said mobile terminal enters said adjustment region and transmits an adjustment region scheduling release request to the base station to which said mobile terminal currently belongs at a time instant when said mobile terminal exits said adjustment region.

11. The mobile terminal of claim 10, wherein
said mobile terminal transmits data using Enhanced Uplink Dedicated Channel (EUDCH).

12. The mobile terminal of claim 10, wherein
said position information judging part measures a first received power PP from the base station to which said mobile terminal currently belongs and a second received power PN from the current adjacent base station,
recognizes that said mobile terminal has entered said adjustment region at a time instant when (PP - PN - DTH1) changes from a positive value to a negative value, and
recognizes that said mobile terminal has exited said adjustment region at a time instant when (PP - PN - DTH2) changes from a negative value to a positive value,
where DTH1 and DTH2 are a first pre-defined differential threshold and a second pre-defined differential threshold, respectively.

13. The mobile terminal of claim 12, wherein
DTH1 is smaller than DTH2.

14. The mobile terminal of claim 10, wherein
said position information judging part measures a received power PN from the current adjacent base station,
recognizes that said mobile terminal has entered said adjustment region at a time instant when (PN - TH1) changes from a negative value to a positive value, and
recognizes that said mobile terminal has exited said adjustment region at a time instant when (PN - TH2) changes from a positive value to a negative value,
where TH1 and TH2 are a first pre-defined threshold and a second pre-defined threshold, respectively.

15. The mobile terminal of claim 14, wherein
TH1 is larger than TH2.

16. A base station that is used in a mobile communication system including a plural number of mobile terminals, a first base station that individually controls a transmission rate of said plural number of mobile terminals and a second base station that is adjacent to said first base station and a radio network controller that controls said first and second base stations, said system being provided with a soft-hand-over region in each of cells that are covered by said first and second base stations and being provided with an adjustment region in each of said cells that is externally adjacent to said soft-hand-over region,
said base station comprising:
an adjustment instruction signal generating part that outputs an adjustment instruction signal during a period from reception of a scheduling adjustment start request from said radio network controller to reception of a soft-hand-over start notification from said radio network controller and during a period from reception of a soft-hand-over end notification from said radio network controller to reception of a scheduling adjustment end request from said radio network controller;
a scheduling controlling part that generates a scheduling control signal for controlling scheduling of said mobile terminal; and
an adjusting part that adjusts said scheduling control signal and transmits said adjusted scheduling control signal to said mobile terminal when said adjustment instruction signal is supplied and transmits said scheduling control signal to said mobile terminal without any adjustment when said adjustment instruction signal is not supplied.

17. The base station of claim 16, wherein
said adjusting part adjusts said scheduling control signal to lower transmission rate of said mobile terminal when said adjustment instruction signal is supplied.

18. The base station of claim 16, wherein
said base station receives data by Enhanced Uplink Dedicated Channel (EUDCH) from said mobile terminals.

19. The base station of claim 18, wherein
said scheduling control signal is a Rate Grant signal.

20. The base station of claim 16, wherein
said scheduling controlling part, in scheduling said plural number of mobile terminals, performs said scheduling with a higher priority set on those mobile terminals outside said adjustment region than other mobile terminals.

21. A radio network controller that is used in a mobile communication system comprising a plural number of mobile terminals, a first base station that individually controls a transmission rate of said plural number of mobile terminals and a second base station that is adjacent to said first base station and the radio network controller that controls said first and second base stations, said system being provided with a soft-hand-over region in each of cells that are covered by said first and second base stations and being provided with an adjustment region in each of said cells that is externally adjacent to said soft-hand-over region,
said radio network controller comprising:
a radio network controller side request signal transmitting part that transmits a scheduling adjustment start request to a base station to which said mobile terminal currently belongs upon receiving an adjustment region scheduling request from said mobile terminal and transmits a scheduling adjustment end request to a base station to which said mobile terminal currently belongs upon receiving an adjustment region scheduling release request from said mobile terminal; and
a soft-hand-over state notifying part that notifies start and end of soft-hand-over to said first and second base stations.

22. A mobile terminal transmission scheduling method that is used in a mobile communication system including a plural number of mobile terminals, a first base station that individually controls a transmission rate of said plural number of mobile terminals, a second base station that is adjacent to said first base station and a radio network controller that controls said first and second base stations, said system being provided with a soft-hand-over region in each of cells that are covered by said first and second base stations and being provided with an adjustment region in each of said cells that is externally adjacent to said soft-hand-over region,
said method comprising the steps of:
(A) said mobile terminal detects time instants when said mobile terminal enters and exits said adjustment region;
(B) said mobile terminal transmits an adjustment region scheduling request to said radio network controller via a base station to which said mobile terminal currently belongs at a time instant when said mobile terminal enters said adjustment region, and said mobile terminal transmits an adjustment region scheduling release request to said radio network controller via a base station to which said mobile terminal currently belongs at a time instant when said mobile terminal exits said adjustment region;
(C) said radio network controller transmits a scheduling adjustment start request to a base station to which said mobile terminal currently belongs upon receiving said adjustment region scheduling request from said mobile terminal, notifies a start and an end of soft-hand-over to said first and second base stations and transmits a scheduling adjustment end request to a base station to which said mobile terminal currently belongs upon receiving said adjustment region scheduling release request from said mobile terminal;
(D) one of said first and second base station generates a scheduling control signal for controlling scheduling of said mobile terminal;
(E) each of said first and second base stations generates an adjustment instruction signal during a period from reception of said scheduling adjustment start request to reception of said soft-hand-over start notification and generates an adjustment instruction signal during a period from reception of said soft-hand-over end notification to reception of said scheduling adjustment end request; and
(F) each of said first and second base stations adjusts said scheduling control signal and transmits the adjusted scheduling control signal to said mobile terminal when said adjustment instruction signal is supplied and transmits said scheduling control signal to said mobile terminal without any adjustment when said adjustment instruction signal is not supplied.

23. The method of claim 22, wherein
said step (F) adjusts said scheduling control signal to lower transmission rate of said mobile terminal when said adjustment instruction signal is supplied.

24. The method of claim 22, wherein
said mobile terminal transmits data using Enhanced Uplink Dedicated Channel (EUDCH).

25. The method of claim 24, wherein
said scheduling control signal is a Rate Grant signal.

26. The method of claim 22, wherein
said step (A) measures a first received power PP from the base station to which said mobile terminal currently belongs and a second received power PN from the current adjacent base station,
recognizes that said mobile terminal has entered said adjustment region at a time instant when (PP - PN - DTH1) changes from a positive value to a negative value, and
recognizes that said mobile terminal has exited said adjustment region at a time instant when (PP - PN - DTH2) changes from a negative value to a positive value,
where DTH1 and DTH2 are a first pre-defined differential threshold and a second pre-defined differential threshold, respectively.

27. The method of claim 26, wherein
DTH1 is smaller than DTH2.

28. The method of claim 22, wherein
said step (A) measures a received power PN from the current adjacent base station,
recognizes that said mobile terminal has entered said adjustment region at a time instant when (PN-TH1) changes from a negative value to a positive value, and
recognizes that said mobile terminal has exited said adjustment region at a time instant when (PN - TH2) changes from a positive value to a negative value,
where TH1 and TH2 are a first pre-defined threshold and a second pre-defined threshold, respectively.

29. The method of claim 28, wherein
TH1 is larger than TH2.

30. The method of claim 22, wherein
said step (D), in scheduling said plural number of mobile terminals, performs said scheduling with a higher priority set on those mobile terminals outside said adjustment region than other mobile terminals.

31. A mobile terminal transmission scheduling method that is used in a mobile terminal of a mobile communication system including a plural number of mobile terminals, a first base station that individually controls a transmission rate of said plural number of mobile terminals and a second base station that is adjacent to said first base station, said system being provided with a soft-hand-over region in each of cells that are covered by said first and second base stations; and being provided with an adjustment region in each of said cells that is externally adjacent to said soft-hand-over region,
said method comprising the steps of:
(A) detecting time instants when said mobile terminal enters and exits said adjustment region; and
(B) transmitting an adjustment region scheduling request to a base station to which said mobile terminal currently belongs at a time instant when said mobile terminal enters said adjustment region and transmitting an adjustment region scheduling release request to a base station to which said mobile terminal currently belongs at a time instant when said mobile terminal exits said adjustment region;

32. The method of claim 31, wherein
said mobile terminal transmits data using Enhanced Uplink Dedicated Channel (EUDCH).

33. The method of claim 31, wherein
said step (A) measures a first received power PP from the base station to which said mobile terminal currently belongs and a second received power PN from the current adjacent base station, recognizes that said mobile terminal has entered said adjustment region at a time instant when (PP - PN - DTH1) changes from a positive value to a negative value, and
recognizes that said mobile terminal has exited said adjustment region at a time instant when (PP - PN - DTH2) changes from a negative value to a positive value,
where DTH1 and DTH2 are a first pre-defined differential threshold and a second pre-defined differential threshold, respectively.

34. The method of claim 33, wherein
DTH1 is smaller than DTH2.

35. The method of claim 31, wherein
said step (A) measures a received power PN from the current adjacent base station,
recognizes that said mobile terminal has entered said adjustment region at a time instant when (PN - TH1) changes from a negative value to a positive value, and
recognizes that said mobile terminal has exited said adjustment region at a time instant when (PN - TH2) changes from a positive value to a negative value,
where TH1 and TH2 are a first pre-defined threshold and a second pre-defined threshold, respectively.

36. The method of claim 35, wherein
TH1 is larger than TH2.

37. A mobile terminal transmission scheduling method that is used in a base station of a mobile communication system including a plural number of mobile terminals, a first base' station that individually controls a transmission rate of said plural number of mobile terminals, a second base station that is adjacent to said first base station and a radio network controller that controls said first and second base stations, said system being provided with a soft-hand-over region in each of cells that are covered by said first and second base stations; and being provided with an adjustment region in each of said cells that is externally adjacent to said soft-hand-over region,
said method comprising the steps of:
(A) generating a scheduling control signal for controlling scheduling of said mobile terminal;
(B) generating an adjustment instruction signal during a period from reception of a scheduling adjustment start request from said radio network controller to reception of a soft-hand-over start notification from said radio network controller and also during a period from reception of a soft-hand-over end notification from said radio network controller to reception of a scheduling adjustment end request from said radio network controller; and
(C) adjusting said scheduling control signal and transmitting said adjusted scheduling control signal to said mobile terminal when said adjustment instruction signal is supplied; and transmitting said scheduling control signal to said mobile terminal without any adjustment when said adjustment instruction signal is not supplied.

38. The method of claim 37, wherein
said step (C) adjusts said scheduling control signal to lower transmission rate of said mobile terminal when said adjustment instruction signal is supplied.

39. The method of claim 37, wherein
said base station receives data from said mobile terminal using Enhanced Uplink Dedicated Channel (EUDCH).

40. The method of claim 39, wherein
said scheduling control signal is a Rate Grant signal.

41. The method of claim 37, wherein
said step (A), in scheduling said plural number of mobile terminals, performs said scheduling with a higher priority set on those mobile terminals outside said adjustment region than other mobile terminals.

42. A mobile terminal transmission scheduling method that is used in a radio network controller for use in a mobile communication system including a plural number of mobile terminals, a first base station that individually controls a transmission rate of said plural number of mobile terminals, a second base station that is adjacent to said first base station and the radio network controller that controls said first and second base stations, said system being provided with a soft-hand-over region in each of cells that are covered by said first and second base stations and being provided with an adjustment region in each of said cells that is externally adjacent to said soft-hand-over region,
said method comprising the steps of:
(A) transmitting a scheduling adjustment start request to a base station to which said mobile terminal currently belongs upon receiving an adjustment region scheduling request from said mobile terminal;
(B) notifying start and end of soft-hand-over to said first and second base stations; and
(C) transmitting a scheduling adjustment end request to a base station to which said mobile terminal currently belongs upon receiving an adjustment region scheduling release request from said mobile terminal.

43. A recording medium that records a program for running a computer as a mobile terminal that is used in a mobile communication system including a plural number of mobile terminals, a first base station that individually controls a transmission rate of said plural number of mobile terminals and a second base station that is adjacent to said first base station, said system being provided with a soft-hand-over region in each of cells that are covered by said first and second base stations and being provided with an adjustment region in each of said cells that is externally adjacent to said soft-hand-over region,
said program comprising the steps of:
(A) detecting time instants when said mobile terminal enters and exits said adjustment region; and
(B) transmitting an adjustment region scheduling request to a base station to which said mobile terminal currently belongs at a time instant when said mobile terminal enters said adjustment region and transmitting an adjustment region scheduling release request to a base station to which said mobile terminal currently belongs at a time instant when said mobile terminal exits said adjustment region;

44. The recording medium of claim 43, wherein
said mobile terminal transmits data using Enhanced Uplink Dedicated Channel (EUDCH).

45. The recording medium of claim 43, wherein
said step (A) measures a first received power PP from the base station to which said mobile terminal currently belongs and a second received power PN from the current adjacent base station, recognizes that said mobile terminal has entered said adjustment region at a time instant when (PP - PN - DTH1) changes from a positive value to a negative value, and
recognizes that said mobile terminal has exited said adjustment region at a time instant when (PP - PN - DTH2) changes from a negative value to a positive value,
where DTH1 and DTH2 are a first pre-defined differential threshold and a second pre-defined differential threshold, respectively.

46. The recording medium of claim 45, wherein
DTH1 is smaller than DTH2.

47. The recording medium of claim 43, wherein
said step (A) measures a received power PN from the current adjacent base station,
recognizes that said mobile terminal has entered said adjustment region at a time instant when (PN - TH1) changes from a negative value to a positive value, and
recognizes that said mobile terminal has exited said adjustment region at a time instant when (PN - TH2) changes from a positive value to a negative value,
where TH1 and TH2 are a first pre-defined threshold and a second pre-defined threshold, respectively.

48. The recording medium of claim 47, wherein
TH1 is larger than TH2.

49. A recording medium that records a program for running a computer as a base station that is used in a mobile communication system including a plural number of mobile terminals, a first base station that individually controls a transmission rate of said plural number of mobile terminals, a second base station that is adjacent to said first base station and a radio network controller that controls said first and second base stations, said system being provided with a soft-hand-over region in each of cells that are covered by said first and second base stations and being provided with an adjustment region in each of said cells that is externally adjacent to said soft-hand-over region, said program comprising the steps of:
(A) generating a scheduling control signal for controlling scheduling of said mobile terminal;
(B) generating an adjustment instruction signal during a period from reception of a scheduling adjustment start request from said radio network controller to reception of a soft-hand-over start notification from said radio network controller and also during a period from reception of a soft-hand-over end notification from said radio network controller to reception of a scheduling adjustment end request from said radio network controller; and
(C) adjusting said scheduling control signal and transmitting the adjusted scheduling control signal to said mobile terminal when said adjustment instruction signal is supplied and transmitting said scheduling control signal to said mobile terminal without any adjustment when said adjustment instruction signal is not supplied.

50. The recording medium of claim 49, wherein
said step (C) adjusts said scheduling control signal to lower transmission rate of said mobile terminal when said adjustment instruction signal is supplied.

51. The recording medium of claim 49, wherein
said base station receives, from said mobile terminal, data using Enhanced Uplink Dedicated Channel (EUDCH).

52. The recording medium of claim 51, wherein
said scheduling control signal is a Rate Grant signal.

53. The recording medium of claim 49, wherein
said step (A), in scheduling said plural number of mobile terminals, performs said scheduling with a higher priority set on those mobile terminals outside said adjustment region than other mobile terminals.

54. A recording medium that records a program for running a computer as a radio network controller that is used in a mobile communication system including a plural number of mobile terminals, a first base station that individually controls a transmission rate of said plural number of mobile terminals, a second base station that is adjacent to said first base station and a radio network controller that controls said first and second base stations, said system being provided with a soft-hand-over region in each of cells that are covered by said first and second base stations and being provided with an adjustment region in each of said cells that is externally adjacent to said soft-hand-over region,
said program comprising the steps of:
(A) transmitting a scheduling adjustment start request to a base station to which said mobile terminal currently belongs upon receiving an adjustment region scheduling request from said mobile terminal;
(B) notifying start and end of soft-hand-over to said first and second base stations; and
(C) transmitting a scheduling adjustment end request to a base station to which said mobile terminal currently belongs upon receiving an adjustment region scheduling release request from said mobile terminal.
